# EUROPEAN PATENT APPLICATION

(11) **EP 0 902 200 A2**
(43) Date of publication of application: **17.03.1999**
(21) Application number: 98202980.3
(22) Date of filing: 07.09.1998
(51) Int. Cl.: F16C 1/24

(54) **Pigmented remote control cable lubricant**

(30) Priority: 15.09.1997 US 929563
(71) Applicant: TELEFLEX INCORPORATED, Plymouth Meeting, Pennsylvania 19462 (US)
(72) Inventor: Jusick, Michael, Michigan Centre, MI 49254 (US)
(74) Representative: Wharton, Peter Robert

(57) **Abstract**

A motion transmitting remote control assembly **(10)** comprising a conduit **(12)** having an inner surface slidably supporting a motion transmitting core element **(16)** and a coating of lubricant **(28)** on the core element **(16)** for reducing friction between the core element **(16)** and the inner surface of the conduit **(12).** The assembly **(10)** is characterized by an additive material **(30)** of phosphorous mixed with the lubricant **(28)** for visually determining the presence of lubricant **(28)** with ultra violet light **(32)**.

The invention also includes a method of checking for the presence of a lubricant **(28)** on the core element **(16)** comprising the steps of mixing a lubricant **(28)** with a phosphorous material **(30)**, applying the mixture to the core element **(16)** and subjecting the core element **(16)** to ultra violet light conditions **(32)** to visually inspect for the coverage of lubricant **(28)** over the core element **(16)**.

## Description

### BACKGROUND OF THE INVENTION

### 1. Field of the Invention

The subject invention relates to a motion transmitting remote control assembly of the type for transmitting motion in a curved path by a flexible motion transmitting core element.

### 2. Description of the Prior Art

Such motion transmitting assemblies frequently employ a lubricant to reduce the friction between the moving core element and the conduit. However, it frequently occurs that the lubricant fails to coat the entire core element, i.e., a deficient coating of lubricant. Without sufficient lubricant, the forces necessary to move the core element within the conduit can become excessive and even cause binding to prevent the movement of the core element.

### SUMMARY OF THE INVENTION AND ADVANTAGES

A motion transmitting remote control assembly comprising a conduit having an inner surface slidably supporting a motion transmitting core element and a lubricant coating the core element for reducing friction between the core element and the inner surface of the conduit. The assembly is characterized by an additive material detectable with light and mixed with the lubricant for visually determining the presence of lubricant.

The invention also includes a method of checking for the presence of a lubricant on the core element comprising the steps of mixing a lubricant with an additive material which is detectable by predetermined light conditions and subjecting the core element to the predetermined light conditions to visually inspect for the coverage of lubricant over the core element.

The subject invention, therefore, provides a thoroughly lubricated core element to attain the maximum efficiency.

### BRIEF DESCRIPTION OF THE DRAWINGS

Other advantages of the present invention will be readily appreciated as the same becomes better understood by reference to the following detailed description when considered in connection with the accompanying drawings wherein:

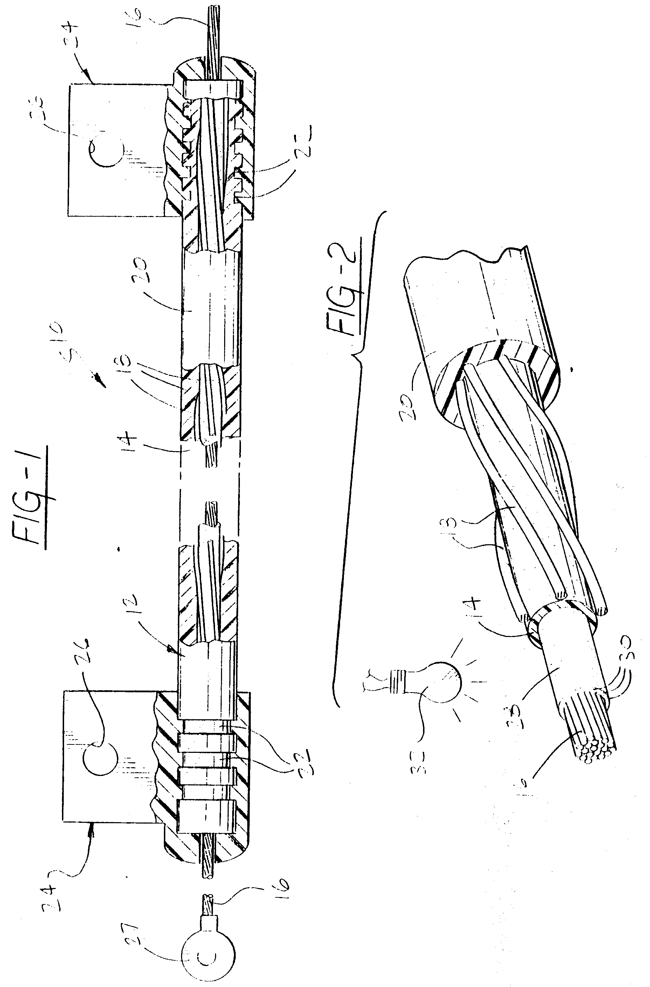

Figure 1 is a side view, partially cut-away and in cross section of a motion transmitting remote control assembly utilizing the subject invention; and
Figure 2 is an enlarged perspective view showing the lubricant/light sensitive mixture being subjected to an ultra violet light.

### DETAILED DESCRIPTION OF THE PREFERRED EMBODIMENT

Referring to the Figures, wherein like numerals indicate like or corresponding parts throughout the several views, a motion transmitting remote control assembly utilizing the subject invention is generally shown at **10**. The assembly **10** comprises a conduit generally shown at **12**. The conduit **12** comprises an inner tubular member **14** having an inner surface and a motion transmitting core element **16** is disposed in sliding engagement with the inner surface of the inner tubular member **14**. A plurality of long lay wires or filaments **18** are disposed on a long helical lead about the inner tubular member **14** and a casing **20** is extruded about the inner tubular member **14** and the long lay wires **18**. The inner tubular member **14** and the casing **20** are made of organic polymeric materials as is well known in the art. The long lay wires may be either metal or reinforced plastic.

The conduit **12** has grooves **22** therein and an end fitting or ferrule **24** of organic polymeric material is molded about the casing and in mechanical interlocking engagement with the grooves **22**. Preferably the plastic material of the fittings diffuses into the plastic material of the casing **20**. The fittings have holes **26** therein for attachment to a support structure, such as the body of a vehicle.

A terminal **27** is molded to the end of the core element **16** for attachment to a control member. The core element **16** is preferably made of stranded filaments wound together to form a rope-like tension bearing member. Alternatively, the core element **16** may consist of a wire which will carry loads in compression.

In any case, the assembly includes a lubricant **28** coating the core element **1**6 for reducing friction between the core element **16** and the inner surface of the inner tubular member **14** of the conduit **12**.

The assembly **10** is characterized by an additive material **30** detectable with light and mixed with said lubricant **28** for visually determining the presence of the lubricant **28**. More specifically, the additive material **30** comprises phosphorous which is visible in ultra violet light, i.e., a florescent dye.

The invention, therefore, includes a method of checking for the presence of a lubricant **28** on the core element **16** comprising the steps of mixing a lubricant **28** with an additive material **30** to provide a mixture which is detectable by predetermined light conditions, applying the mixture to the core element **16**, and subjecting the core element **16** to the predetermined light conditions to visually inspect for the coverage of lubricant **28** over the core element **16**. The core element **16** may be pulled through a bath of the mixture or the mixture may be applied by brushes, or the like, with the lubricant coated core element **16** then inserted into the inner liner **14** of the conduit **12.** The method is further defined as mixing an additive material **30** which is visible in ultra violet light **32** and subjecting the core element **16** to ultra violet light **32** it define the predetermined light conditions to visually inspect for the coverage of lubricant **28** over the core element **16.** Further yet, the mixing of an additive material **30** may be defined as mixing phosphorous.

This invention has been implemented by mixing one percent by volume of a phosphorous or florescent dye with a lubricant, the dye may be that sold by Chromatech Incorporated of Canton, Michigan under the trademark "Flouroyellow X-0697" and the lubricant may be a silicone fluid sold by Wacker Chemicals of Adrian, Michigan under the trademark "E-155".

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. A motion transmitting remote control assembly (**10**) comprising:
a conduit **(12)** having an inner surface;
a motion transmitting core element **(16)** disposed in sliding engagement with said inner surface of said conduit **(12)**;
a coating of lubricant **(28)** on said core element **(16)** for reducing friction between said core element **(16)** and said inner surface of said conduit **(12)**;
said assembly **(10)** characterized by an additive material **(30)** detectable with light and mixed with said lubricant **(28)** for visually determining the presence of lubricant **(28)**.

2. An assembly as set forth in claim 1 wherein said additive material **(30)** is visible in ultra violet light **(32)**.

3. An assembly as set forth claim 2 wherein said additive material **(30)** is phosphorous.

4. An assembly as set forth in claim 3 including at least one end fitting **(24)** on said conduit **(12)** for supporting said conduit **(12)** on a support structure, and a terminal **(27)** on at least one end of said core element **(16)** for attachment to a control member.

5. A method of checking for the presence of a lubricant **(28)** on the core element **(16)** which is slidably disposed in a conduit **(12)** of a motion transmitting remote control assembly, said method comprising the steps of:
mixing a lubricant **(28)** with an additive material **(30)** to provide a mixture which is detectable by predetermined light conditions;
applying the mixture to the core element **(16);** and
subjecting the core element **(16)** to the predetermined light conditions to visually inspect for lubricant **(28)** coverage over the core element **(16).**

6. A method as set forth in claim 5 further defined as mixing an additive material **(30)** which is visible in ultra violet light **(32)** and subjecting the core element **(16)** to ultra violet light **(32)** it define the predetermined light conditions to visually inspect for lubricant **(28)** coverage over the core element **(16)**.

7. A method as set forth in claim 6 further defined as mixing an additive material **(30)** which is phosphorous.
